# EUROPÄISCHE PATENTANMELDUNG

(11) **EP 1 510 704 A1**
(43) Veröffentlichungstag der Anmeldung: **02.03.2005**
(21) Anmeldenummer: 04015940.2
(22) Anmeldetag: 07.07.2004
(51) Int. Cl.: F16B 12/32, F16B 12/34, F16B 17/00

(54) **Befestigungsvorrichtung**

(30) Priorität: 29.08.2003 DE 10339860
(71) Anmelder: KUKA Roboter GmbH, 86165 Augsburg (DE)
(72) Erfinder: Karlinger, Stefan, D-86199, Augsburg (DE)
(74) Vertreter: Lempert, Jost, Dipl.-Phys. Dr. rer.nat.

(57) **Zusammenfassung**

Eine Vorrichtung zum Befestigen von weiteren Elementen an einem stabförmigen Bauteil, insbesondere bei einem Industrieroboter, mit zwei identischen Winkelteilen zeichnet sich dadurch aus, dass jedes Winkelteil (10.1, 10.2) einen ersten und einen zweiten Schenkel (10.1a, 10.1b bzw. 10.2a, 10.2b) aufweist, die winklig zueinander ausgerichtet sind und die durch einen Übergangsbereich mit gegenüber den Schenkel verminderter Höhe miteinander verbunden sind, und dass der erste Schenkel (10.1a, 10.2a) in seiner dem zweiten Schenkel (10.1b, 10.2b) zugewandten Kante eine Ausnehmung (10.1e, 10.2e) aufweist, in die der Übergangsbereich (10.1c, 10.2c) des jeweils anderen Winkelteils (10.1, 10.2) eingreift. Auf diese Weise ist eine sichere, kostengünstige und einfach zu montierende Befestigungsmöglichkeit für weitere Elemente an einem stabförmigen Bauteil geschaffen.

## Beschreibung

Die Erfindung betrifft eine Vorrichtung zum Befestigen von weiteren Elementen an einem stabförmigen Bauteil, insbesondere bei einem Industrieroboter, mit zwei identischen Winkelteilen. Weiterhin betrifft die Erfindung eine Einrichtung zum Befestigen von weiteren Elementen an einem Gegenstand, insbesondere einem Industrieroboter, mit zwei identischen Winkelteilen und mit einem stab- oder rohrförmigen Bauteil, das an dem Gegenstand befestigbar ist.

Bei Betrieb von Industrierobotern ist es erforderlich, Zusatzteile des Roboters, wie Kabel, Schläuche oder dergleichen, in eine in Bezug auf Teile des Roboters, wie einem Roboterarm, räumlich definierte Stellung zu bringen, um eine Behinderung des Roboters sowie eine Beschädigung der Zusatzteile sicher auszuschließen. Zu diesem Zweck werden insbesondere zum räumlichen Positionieren von Kabeln und Schläuchen weitere Elemente in Form von Schlauchhaltern eingesetzt, die über spezielle Halteeinrichtungen an einem Roboterteil befestigt sind.

Derartige Halteeinrichtungen sind beispielsweise aus der DE 299 02 947 U1 und der DE 101 21 030 A1 bekannt und weisen ein mehrteiliges Ringteil auf, das um ein Roboterteil, wie den Flansch einer Roboterhand, gelegt und gegen dieses verspannt wird. Weiterhin besitzen die vorbekannten Haltevorrichtungen ein mit dem Ringteil verbundenes stabförmiges Bauteil, an dem die weiteren Elemente, z.B. Schlauchhalter, befestigt sind.

Zum Befestigen der Schlauchhalter an dem stabförmigen Bauteil wird bei den Gegenständen der genannten Druckschriften eine Vorrichtung mit einem standardisierten Befestigungsstück aus Aluminiumguss eingesetzt, das nach einem Verschrauben das stabförmige Bauteil kraftschlüssig umgreift. Um weitere Elemente, z.B. Schlauchhalter, mit dem Befestigungsstück zu verbinden, beinhaltet die Vorrichtung darüber hinaus ein zusätzliches Blech mit weiteren Befestigungsmitteln, wie Schrauben, benötigt, über das die nach speziellen Spezifikationen gefertigten weiteren Elemente mit den standardisierten Befestigungsstücken verbindbar sind.

Bei den genannten vorbekannten Vorrichtungen ist insbesondere als nachteilig anzusehen, dass die genannten Standard-Befestigungsstücke aus Aluminium einerseits teuer sind und andererseits aufgrund der Fließeigenschaften des Aluminiums eine mit der Zeit nachlassende Befestigungsgüte aufweisen können. Außerdem wird zum Anpassen der weiteren Elemente an die standardisierten Befestigungsstücke ein zusätzliches Bauteil benötigt, wodurch weitere Kosten verursacht werden.

Der Erfindung liegt die Aufgabe zugrunde, bei einer gleichzeitigen Kostenreduzierung eine Verbesserung der Befestigungseigenschaften zu erreichen.

Die Aufgabe wird bei einer Vorrichtung der eingangs genannten Art dadurch erreicht, dass jedes Winkelteil einen ersten und einen zweiten Schenkel aufweist, die winklig zueinander ausgerichtet sind und die durch einen Übergangsbereich mit gegenüber den Schenkeln verminderter Höhe miteinander verbunden sind, und dass der erste Schenkel in seiner dem zweiten Schenkel zugewandten Kante eine Ausnehmung aufweist, in die der Übergangsbereich des jeweils anderen Winkelteils eingreift.

Bei einer Einrichtung der zweiten genannten Art wird die Aufgabe dadurch gelöst, dass jedes Winkelteil einen ersten und einen zweiten Schenkel aufweist, die winklig zueinander ausgerichtet sind und die durch einen Übergangsbereich mit gegenüber den Schenkeln verminderter Höhe miteinander verbunden sind, dass der erste Schenkel in seiner dem zweiten Schenkel zugewandten Kante eine Ausnehmung aufweist, in die der Übergangsbereich des jeweils anderen Winkelteils eingreift, so dass zwischen den zweiten Schenkeln ein Bereich gebildet ist, in dem ein Abschnitt des Bauteils aufnehmbar ist, und dass das Bauteil in seiner Mantelfläche Vertiefungen aufweist, in die an dem zweiten Schenkel zumindest eines Winkelteils vorhandene Positionierungsmittel einbringbar sind.

Erfindungsgemäß wird also das nach dem Stand der Technik verwendete Aluminium-Befestigungsstück und das mit diesem zu verwendende Verbindungsblech durch eine Anordnung von zwei identischen, einfach herzustellenden und damit kostengünstigen Biegeteilen, beispielsweise aus Stahl, ersetzt, die einerseits in einfacher Weise klemmend an dem stabförmigen Bauteil positionierbar und andererseits zur Befestigung weiterer Elemente verwendbar ist.

Dazu ist nach einer Weiterbildung der erfindungsgemäßen Vorrichtung vorgesehen, dass ein zwischen den Schenkeln eines Winkelteils eingeschlossener Winkel im wesentlichen ein rechter ist. Auf diese Weise lassen sich zwei identische Winkelteile durch Ineingriffbringen des Übergangsbereichs eines Winkelteils mit der Ausnehmung des jeweils anderen Winkelteils leicht dergestalt miteinander verbinden, dass die ersten und zweiten Schenkel der Winkelteile jeweils paarweise parallel angeordnet sind, wobei jedoch die ersten Schenkel fluchten, während die zweiten Schenkel sich in ihrer ganzen Länge gegenüberliegen.

Um die erfindungsgemäße Vorrichtung über die vorstehend beschriebene Anordnung zweiter Schenkel an dem stabförmigen Bauteil festlegen zu können, sieht eine Weiterbildung der erfindungsgemäßen Vorrichtung vor, dass der zweite Schenkel zum ersten Schenkel hin in Richtung seiner Erstreckung ein konkaves Profil aufweist. Durch das konkave Profil des zweiten Schenkels entsteht, wenn die beiden Winkelteile wie vorstehend beschrieben angeordnet sind, zwischen den zweiten Schenkeln ein Freiraum, in den das stabförmige Bauteil einbringbar ist. Vorzugsweise entspricht daher eine Profiltiefe höchstens einem halben Durchmesser des stabförmigen Bauteils.

Zwecks einer sicheren Positionierung der erfindungsgemäßen Vorrichtung an dem stabförmigen Bauteil kann weiterhin vorgesehen sein, dass der zweite Schenkel an seinem dem ersten Schenkel abgewandten Ende Aufnahmemittel für Verbindungselemente zum Verbinden der entsprechenden Enden der beiden Winkelteile aufweist. Beispielsweise kann es sich bei den Aufnahmemitteln um Bohrungen im Endbereich der zweiten Schenkel handeln, durch die diese mittels Verbindungselementen, beispielsweise in Form von Schrauben, dergestalt miteinander verbindbar sind, dass das stabförmige Bauteil in dem Freiraum zwischen den zweiten Schenkeln klemmend gehalten ist.

Zum Befestigen der weiteren Elemente, wie Schlauchhalter oder dergleichen, weist der erste Schenkel vorzugsweise Aufnahmemittel für Befestigungsmittel auf. Auch hier handelt es sich bei den Aufnahmemitteln vorzugsweise um Bohrungen, in die die Befestigungsmittel zum Befestigen der weiteren Elemente, beispielsweise in Form von Schrauben, einbringbar sind.

Zwecks einer sicheren und insbesondere reproduzierbaren Positionierung der erfindungsgemäßen Vorrichtung an dem stabförmigen Bauteil ist nach einer äußerst bevorzugten Weiterbildung der erfindungsgemäßen Vorrichtung vorgesehen, dass an dem zweiten Schenkel zumindest eines Winkelteils Positionierungsmittel zum Festlegen einer Position der Vorrichtung an dem stabförmigen Bauteil angeordnet sind.

Um eine möglichst einfache Montage der erfindungsgemäßen Vorrichtung zu ermöglichen, wobei insbesondere ein Auseinanderfallen der beiden ineinander eingreifenden Winkelteile vermieden werden soll, sieht eine Weiterentwicklung der erfindungsgemäßen Vorrichtung vor, dass die Höhe des Übergangsbereichs zwischen dem ersten und dem zweiten Schenkel eines jeden Winkelteils im wesentlichen einer Höhe der Ausnehmung dem ersten Schenkel jedes Winkelteils entspricht. Auf diese Weise lassen sich die beiden Winkelteile bei der Montage leicht seitlich ineinanderschieben und fallen auch dann nicht auseinander, wenn die genannten Verbindungselemente noch nicht in die Aufnahmemittel der zweiten Schenkel eingebracht sind.

In Weiterentwicklung der erfindungsgemäßen Einrichtung ist vorgesehen, dass die Positionierungsmittel als wenigstens ein in eine Bohrung in dem zweiten Schenkel beweglich eingesetzter Stift ausgebildet sind. Auf diese Weise wird eine sichere und reproduzierbare Positionierung des Winkelteilpaares durch Einbringen des Stifts in die Vertiefungen in der Mantelfläche des Bauteils erreicht.

Vorzugsweise wirkt der Stift mit einem Federmittel zusammen, durch das er in seiner Ruhestellung teilweise in einen Bereich zwischen den zweiten Schenkeln hinein verschoben ist. Auf diese Weise ist das Winkelteilpaar in der Ruhestellung des Stifts in seiner momentanen Position auf dem stabförmigen Bauteil gesichert.

Weitere Eigenschaften und Vorteile der Erfindung ergeben sich aus der nachfolgenden Beschreibung von Ausführungsbeispielen anhand der Zeichnung. Es zeigt:
- Fig. 1: einen Roboter in Seitenansicht;
- Fig. 2: eine perspektivische Ansicht zweier noch nicht miteinander verbundener Winkelteile;
- Fig. 3a-c: perspektivische Darstellungen des Verbindens zweier Winkelteile zu einer ersten erfindungsgemäßen Vorrichtung;
- Fig. 4: eine perspektivische Darstellung des Einsatzes einer erfindungsgemäßen Vorrichtung zum Befestigen eines Schlauchhalters an einem stabförmigen Bauteil;
- Fig. 5: eine perspektivische Darstellung der zweiten erfindungsgemäßen Vorrichtung mit Positionierungsmittel;
- Fig. 6: eine Draufsicht auf die zweite erfindungsgemäße Vorrichtung gemäß der Fig. 5;
- Fig. 7: eine Schnittansicht der zweiten erfindungsgemäßen Vorrichtung längs der Linie VII-VII in Fig. 6; und
- Fig. 8: eine Draufsicht auf die zweite erfindungsgemäße Vorrichtung gemäß der Fig. 5 mit verriegeltem Positionierungsmittel.

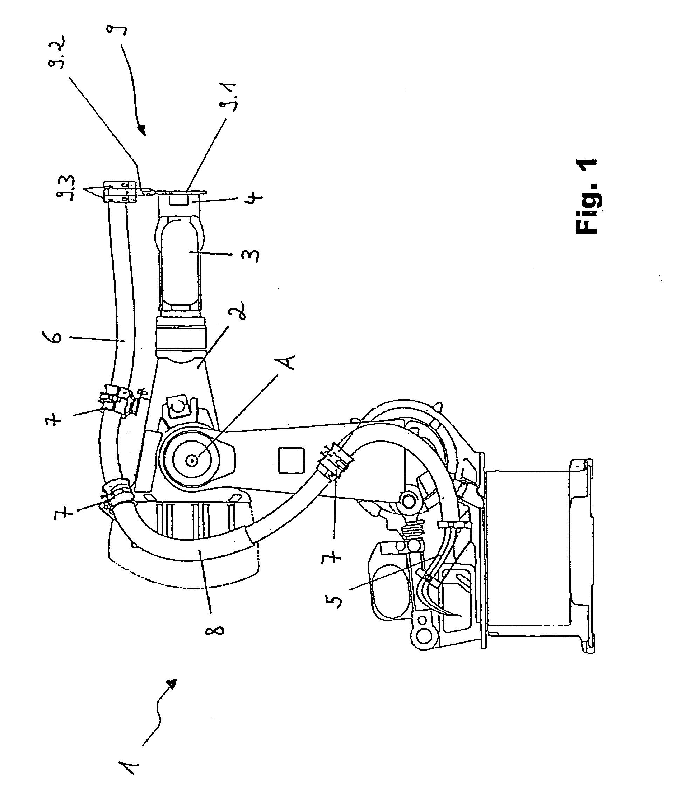

Der in der Fig. 1 dargestellte Roboter 1 weist unter anderem einen um eine horizontale Achse A, die sich in der Fig. 1 senkrecht zur Zeichenebene erstreckt, verschwenkbar angeordneten Roboterarm 2 auf. Dieser trägt an seinem vorderen freien Ende eine Roboterhand 3, die wiederum über zwei Achsen verschwenkbar ist. An dem vorderen freien Ende der Roboterhand 3 ist ein Flansch 4 angeordnet, an dem ein nicht dargestelltes Werkzeug befestigt werden kann. In der Regel werden Kabel 5 zur Energie- und Medienversorgung an der Außenseite des Roboters 1 geführt, wobei die Kabel 5 zum Schutz vor Beschädigungen von einem Schlauch 6 umgeben sind, der dementsprechend ebenfalls entlang der Außenseite des Roboters 1 geführt und zumindest punktuell an diesem festgelegt ist.

Der Schlauch 6 weist für gewöhnlich Rippen (nicht dargestellt) auf und ist mit Schlauchhalterungen 7 sowie einer Druckfeder 8 versehen, wobei Letztere den Schlauch 6 bei Entlastung im Hinblick auf eine Bewegung des Roboters 1 in eine definierte Ausgangslage zurückführt.

An dem vorderen, werkzeugseitigen Ende des Schlauchs 6 ist dieser an einem Schlauchhalter 9 festgelegt, der wiederum an dem Flansch 4 der Roboterhand 3 angeordnet ist.

Der Schlauchhalter 9 weist ein Ringteil 9.1 in Form einer Klemmschelle auf, die den als Lager ausgebildeten Flansch 4 der Roboterhand 3 umschließt, so dass bei einem Anziehen am Ringteil 9.1 vorhandener Befestigungsmittel (nicht gezeigt) der Schlauchhalter 9 eine kraftschlüssige Verbindung mit dem Flansch 4 eingeht.

Weiterhin besitzt der Schlauchhalter 9 einen mit zumindest einem Teil des Ringteils 9.1 einstückigen, stabförmigen Fortsatz 9.2. An Letzterem sind gemäß der Darstellung der Fig. 1 zwei Klappschellen 9.3 befestigt, mittels derer der Schlauch 6 an dem Schlauchhalter 9 festgelegt ist.

Die Befestigung der Schellen 9.3 an dem stabförmigen Fortsatz 9.2 des Schlauchhalters 9 erfolgt mittels einer erfindungsgemäßen Vorrichtung, die in den folgenden Figuren detailliert dargestellt ist.

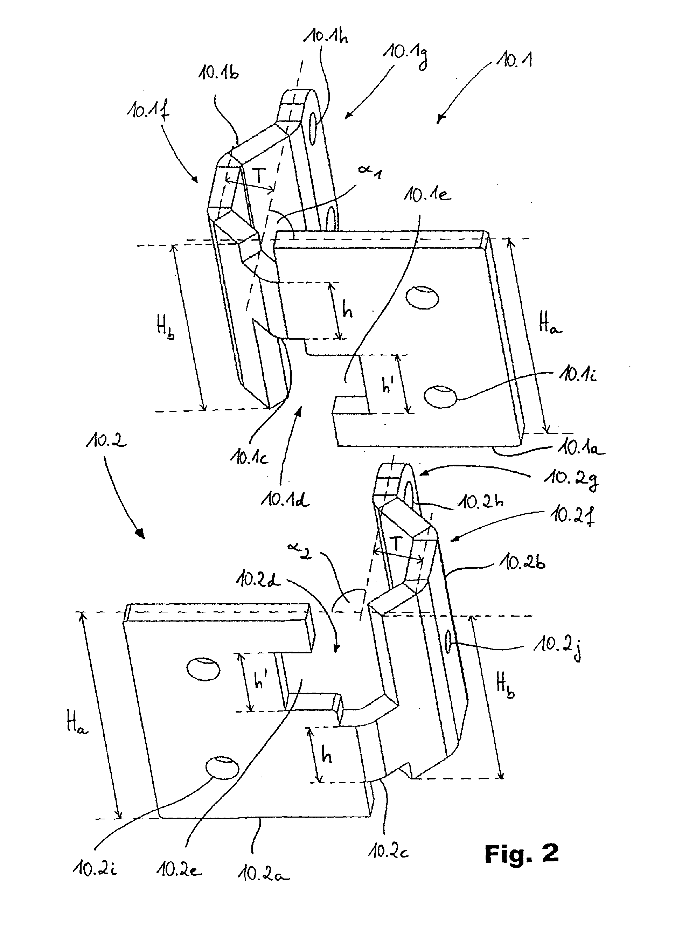

Die Fig. 2 zeigt zwei identische Winkelteile 10.1, 10.2 einer erfindungsgemäßen Vorrichtung in perspektivischer Darstellung, bevor diese zur Bildung der erfindungsgemäßen Vorrichtung miteinander verbunden sind. Die Winkelteile 10.1, 10.2 besitzen jeweils einen ersten Schenkel 10.1a, 10.2a und einen zweiten Schenkel 10.1b, 10.2b, die winklig zueinander ausgerichtet sind, wobei ein zwischen den Schenkeln eingeschlossener Winkel α₁, α₂ gemäß dem Ausführungsbeispiel der Fig. 2 im wesentlichen jeweils ein rechter Winkel ist (die scheinbare Abweichung rührt von der gewählten perspektivischen Darstellung der Fig. 2 her). Die beiden Schenkel 10.1a, 10.1b bzw. 10.2a, 10.2b der Winkelteile 10.1 bzw. 10.2 sind jeweils durch einen Übergangsbereich 10.1c, 10.1d verbunden. Der Übergangsbereich 10.1c bzw. 10.1d weist eine gegenüber einer Höhe Hₐ bzw. H_{b} der Schenkel 10.1a, 10.2a bzw. 10.1b, 10.2b verminderte Höhe h auf; beim Ausführungsbeispiel der Fig. 2 ist h < H_{b} < Hₐ.

Der erste Schenkel 10.1a, 10.2a der Winkelteile 10.1, 10.2 besitzt in seiner dem zweiten Schenkel 10.1b, 10.2b zugewandten Kante 10.1d, 10.2d jeweils eine Ausnehmung 10.1e, 10.2e. Deren Höhe h' ist derart dimensioniert, dass der Übergangsbereich 10.1c, 10.2c eines Winkelteils 10.1, 10.2 in die Ausnehmung (10.le, 10.2e des jeweils anderen Winkelteils eingreifen kann.

In einem sich an den Übergangsbereich 10.1c, 10.2c anschließenden Bereich 10.1f, 10.2f ist der zweite Schenkel 10.1b, 10.2b abweichend von seiner grundlegenden Verlaufsrichtung V konkav ausgebildet, d.h. ein Profil des zweiten Schenkels 10.1b, 10.2b springt in diesem Bereich 10.1f, 10.2f gegenüber der Verlaufslinie V um ein Maß T (Profiltiefe) nach außen zurück. Beim Ausführungsbeispiel der Fig. 2 resultiert die Konkavität des zweiten Schenkels 10.1b, 10.2b aus einem mehrfachen Abwinkeln desselben. Jedoch ist beispielsweise auch eine Ausführungsform des zweiten Schenkels 10.1b, 10.2b mit kontinuierlich veränderlichem oder konstanten Krümmungsradius möglich.

An seinen dem ersten Schenkel 10.1a, 10.2b abgewandten Ende 10.1g, 10.2g weist der zweite Schenkel jeweils zwei Aufnahmemittel in Form von Bohrungen 10.1h, 10.2h auf, in die geeignete Verbindungselemente (nicht gezeigt), wie Schrauben, einbringbar sind. Auch der erste Schenkel 10.1a, 10.2a weist Aufnahmemittel in Form von Bohrungen 10.1i, 10.2i auf, die zum Einbringen von Befestigungsmitteln (nicht gezeigt), beispielsweise Schrauben, zum Befestigen von weiteren Elementen, beispielsweise Schlauchschellen, an der erfindungsgemäßen Vorrichtung dienen.

Die Winkelteile 10.1, 10.2 weisen zudem im konkaven Bereich 10.1f, 10.2f ihres zweiten Schenkels 10.1b, 10.2b Bohrungen 10.1j (in der Darstellung der Fig. 2 nicht erkennbar), 10.2j auf, die einem Einbringen geeigneter Positionierungsmittel (nicht gezeigt) dienen, mit deren Hilfe eine Position der ersten erfindungsgemäßen Befestigungsvorrichtung entlang des stabförmigen Bauteils 9.2 fixierbar und reproduzierbar ist.

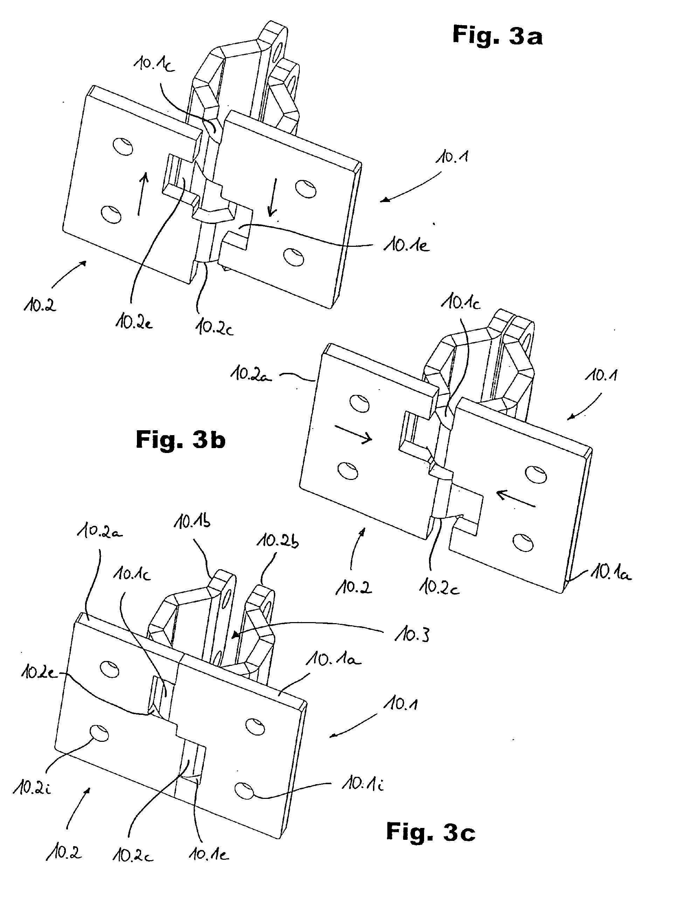

Das Zusammenfügen bzw. Miteinanderverbinden der beiden Winkelteile 10.1, 10.2 gemäß Fig. 1 zu einer ersten erfindungsgemäßen Vorrichtung ist in den Figuren 3a bis 3c anhand dreier zeitlich aufeinanderfolgender, perspektivischer Darstellungen gezeigt. Dabei werden die beiden Winkelteile 10.1, 10.2 derart angeordnet und relativ zueinander verschoben (Pfeile in Fig. 3a), dass sie sich mit ihren Übergangsbereichen 10.1c, 10.2c überkreuzen (Fig. 3a, b), bis die ersten Schenkel 10.1a, 10.2a fluchten (Fig. 3b). Anschließend werden die Winkelteile 10.1, 10.2 in Richtung der Pfeile in Fig. 3b zusammengeschoben, bis die ersten Schenkel 10.1a, 10.2a eine durchgehende Platte bilden, wobei die Übergangsbereiche 10.1c, 10.2c in die Ausnehmung 10.1e, 10.2e des jeweils anderen Winkelteils eingreifen.

Die so aus den ersten Schenkeln 10.1a, 10.2a gebildete Platte mit Bohrungen 10.1i, 10.2i dient anschließend zur Befestigung weiterer Elemente, während zwischen den zweiten Schenkeln 10.1b, 10.2b aufgrund deren konkaven Profils ein freier Bereich 10.3 geschaffen ist, der zur Aufnahme des stabförmigen Bauteils 9.2 (Fig. 1) dient.

Aufgrund der anhand der Fig. 2 erläuterten Dimensionierung der Übergangsbereiche 10.1c, 10.2c (Höhe h) und der Ausnehmungen 10.1e, 10.2e (Höhe h') mit im wesentlichen identischen Höhen sind die Winkelteile 10.1, 10.2 in der in Fig. 3c gezeigten Anordnung durch das Eingreifen der Übergangsbereiche 10.1c, 10.2c in die Ausnehmungen 10.1e, 10.2e klemmend zusammengehalten, so dass eine einfache Montage der erfindungsgemäßen Vorrichtung an dem stabförmigen Bauteil 9.2 (Fig. 1) möglich ist.

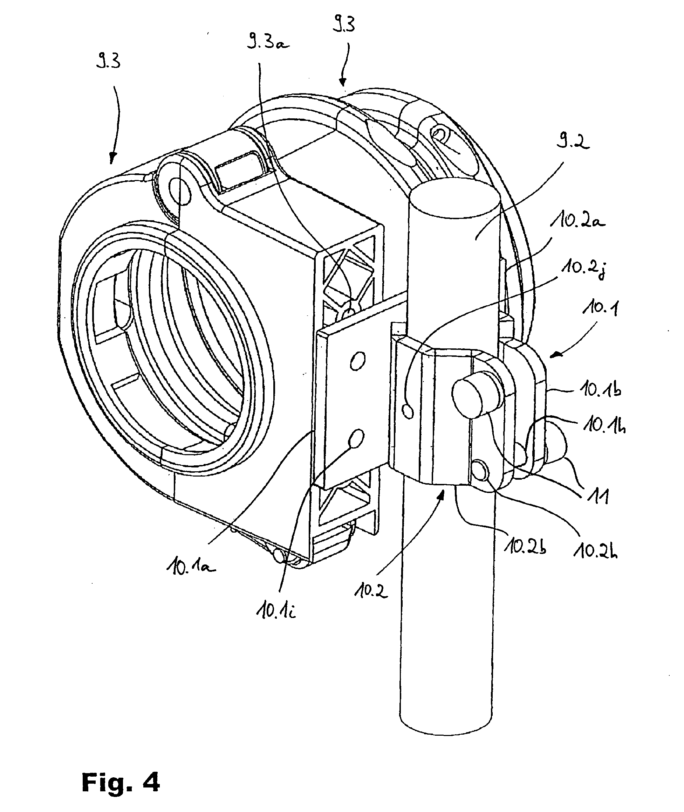

Die Fig. 4 zeigt in einer perspektivischen Darstellung, wie eine erste erfindungsgemäße Vorrichtung aus zwei Winkelteilen 10.1, 10.2 zum Befestigen einer Anordnung aus zwei Schellen 9.3 an einem stabförmigen Bauteil 9.2 einsetzbar ist.

Dazu ist das stabförmige Bauteil 9.2 in den Bereich 10.3 (Fig. 3c) zwischen den zweiten Schenkeln 10.1b, 10.2b der Winkelteile 10.1, 10.2 eingebracht, wobei die erfindungsgemäße Befestigungsvorrichtung durch Einbringen von Schrauben 11 in die Bohrungen 10.1h, 10.2h klemmend an dem stabförmigen Bauteil 9.2 festgelegt ist. Die Schellen 9.3 sind mittels der Bohrungen 10.1i, 10.2i in den ersten Schenkeln 10.1a, 10.2a an der erfindungsgemäßen Befestigungsvorrichtung befestigbar, indem durch die Bohrungen 10.1i, 10.2i geeignete Befestigungsmittel (nicht gezeigt) in entsprechend vorgesehene Aufnahmemittel 9.3a der Schelle 9.3 eingebracht werden.

Um die erste erfindungsgemäße Befestigungsvorrichtung und über diese die Schellen 9.3 in einer bestimmten Stellung bezüglich des stabförmigen Bauteils 9.2 zu fixieren, ermöglicht die Bohrung 10.2j das Einbringen eines geeigneten Positionierungsmittels (in Fig. 4 nicht gezeigt).

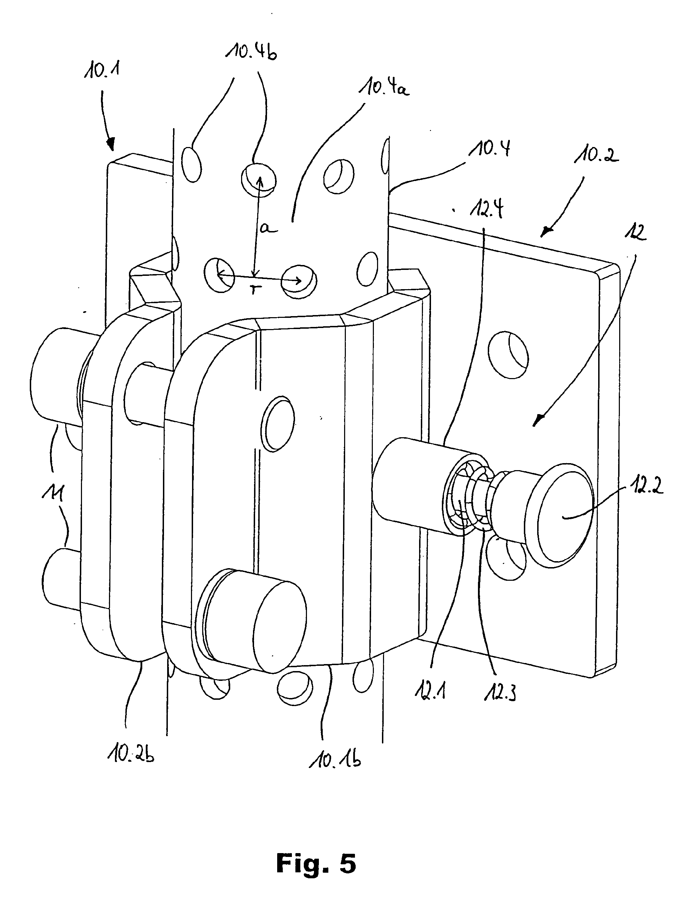

Die Fig. 5 zeigt anhand einer perspektivischen Darstellung eine Ausführungsform der erfindungsgemäßen Befestigungseinrichtung, wie das vorstehend anhand der Fig. 4 erwähnte Positionierungsmittel auch im Falle der erfindungsgemäßen Befestigungsvorrichtung ausgebildet sein kann.

Im Falle der erfindungsgemäßen Befestigungsvorrichtung weist diese zusätzlich zu den bereits beschriebenen Winkelteilen 10.1, 10.2 ein stabförmiges Bauteil 10.4 (entsprechend im Wesentlichen dem bereits gezeigten Bauteil 9.2) auf, das über seine Mantelfläche 10.4a verteilt Vertiefungen besitzt, die gemäß dem Ausführungsbeispiel der Fig. 5 als Durchbrüche 10.4b in dem speziell als Rohr ausgebildeten stabförmigen Bauteil 10.4 ausgebildet sind. Die Durchbrüche 10.4b sind mit bestimmten radialen r und axialen Abständen a kreisartig in dem Bauteil 10.4 angeordnet. Das Bauteil 10.4 selbst ist in nicht näher gezeigter Weise an einem weiteren Gegenstand, beispielsweise dem in der Fig. 1 gezeigten Roboter 1, befestigt.

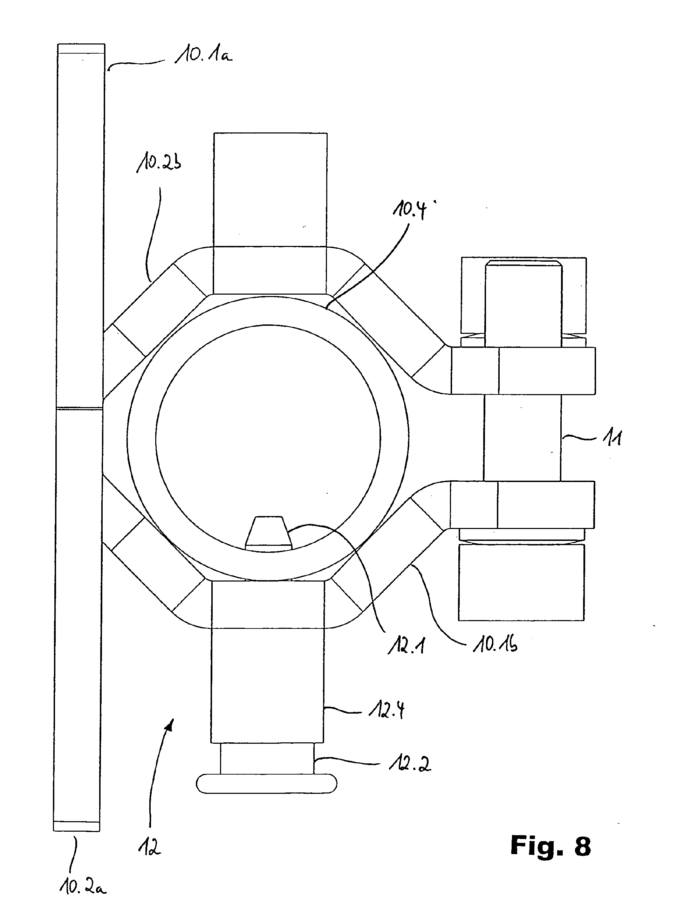

Wie nachfolgend exemplarisch anhand des Winkelteils 10.1 beschrieben, weist wenigstens eines der Winkelteile 10.1, 10.2 Positionierungsmittel 12 auf, die aus einem Stift 12.1 mit Kopf 12.2 gebildet sind, der zusammen mit einer ihn umgebenden und mit ihm zusammenwirkenden Schraubenfeder 12.3 in eine um die Bohrung 10.1j (vergleiche Bohrung 10.2j; Fig. 2, 4) herum angeordnete Hülse 12.4 eingebracht ist. Die Feder 12.3 ist derart einerseits in der Hülse 12.4 und andererseits an dem Stift 12.1 bzw. an dessen Kopf 12.2 befestigt, dass der Stift 12.1 mit seinem dem Kopf 12.2 abgewandten Ende (in Fig. 5 nicht erkennbar) bei unbelasteter Feder 12.3 in den Bereich 10.3 (Fig. 3c) zwischen den zweiten Schenkeln 10.1b, 10.2b der Winkelteile 10.1, 10.2 eindringt und somit die zweite erfindungsgemäße Befestigungsvorrichtung durch Eingreifen in einen der Durchbrüche 10.4b in einer definierten Position bezüglich des Bauteils 10.4 festlegen kann. Dies wird im Folgenden anhand der Fig. 8 noch deutlicher erkennbar.

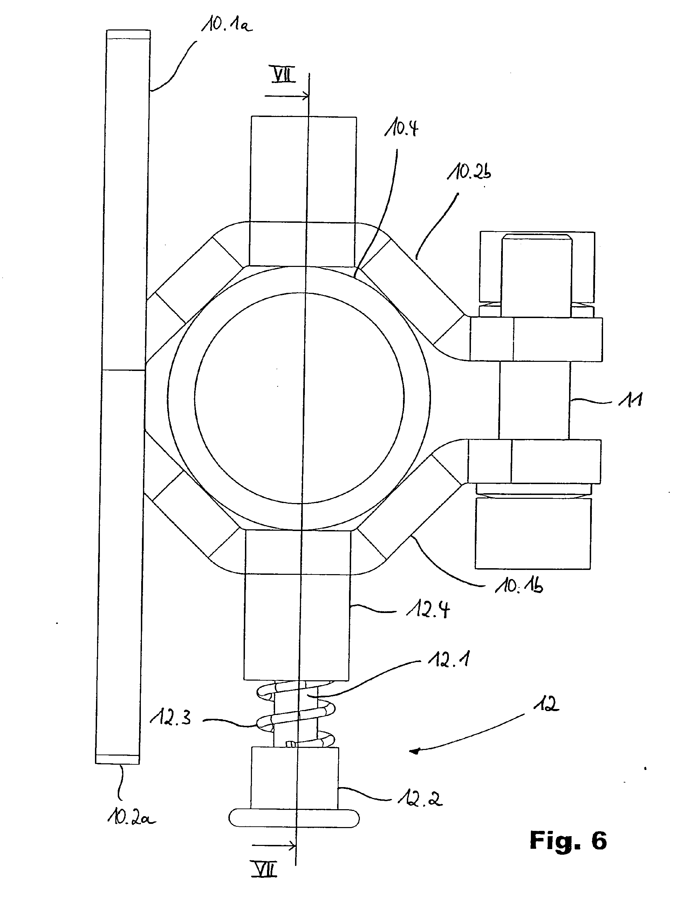

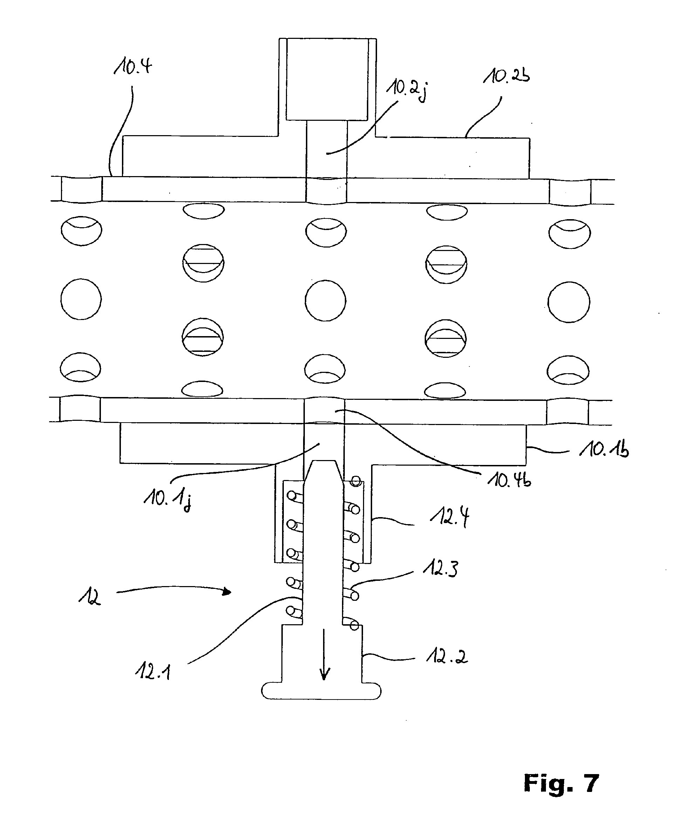

Die Fig. 6 zeigt die Anordnung gemäß der Fig. 5 in einer Draufsicht. Anhand der Schnittansicht der Fig. 7 (Linie VII-VII in Fig. 6) wird nochmals das potentielle Zusammenwirken der Durchbrüche 10.4b des Bauteils 10.4 und des Stifts 12.1 der Positionierungsmittel 12 deutlich erkennbar. Die Feder 12.3 ist in Darstellung der Fig. 7 nach unten in Richtung des Pfeils elongiert, z.B. indem am Kopf 12.2 der Positionierungsmittel 12 gezogen wird, und wird sich beim Wegfallen der entsprechenden Zugkraft so zusammenziehen, dass der Stift 12.1 in den direkt oberhalb, in Verlängerung der Bohrung 10.1j angeordneten Durchbruch 10.4b eindringen und so die Winkelteile 10.1, 10.2 bezüglich des Bauteils 10.4 positionieren kann.

Figur 8 zeigt schließlich in einer der Figur 6 weitgehend entsprechenden Darstellung einen Zustand, in dem der Stift 12.1 nach Wegfallen der Zugkraft (Fig. 7) aufgrund eines Zusammenziehens der Feder (nicht gezeigt) in seine Ruhestellung zurückgekehrt und dabei durch einen Durchbruch 10.4b in einen Innenraum des Bauteils 10.4 (den Bereich 10.3, vgl. Fig. 3c) eingedrungen ist. Die Anordnung der Winkelteile 10.1, 10.2 ist damit bezüglich des Bauteils 10.4 eindeutig positioniert.

### Bezugszeichenliste

- 1: Roboter
- 2: Roboterarm
- 3: Roboterhand
- 4: Flansch
- 5: Kabel
- 6: Schlauch
- 7: Schlauchhalterung
- 8: Druckfeder
- 9: Schlauchhalter
- 9.1: Ringteil
- 9.2: stabförmiges Bauteil
- 9.3: Schelle
- 10.1, 10.2: Winkelteil
- 10.1a, 10.2a: erster Schenkel
- 10.1b, 10.2b: zweiter Schenkel
- 10.1c, 10.2c: Übergangsbereich
- 10.1d, 10.2d: Kante
- 10.1e, 10.2e: Ausnehmung
- 10.1f, 10.2f: konkaver Bereich
- 10.1g, 10.2g: Ende
- 10.1h, 10.2h: Bohrung
- 10.1i, 10.2i: Bohrung
- 10.1j, 10.2j: Bohrung
- 10.3: Bereich
- 10.4: stabförmiges Bauteil
- 10.4a: Mantelfläche
- 10.4b: Durchbruch
- 11: Schraube
- 12: Positionierungsmittel
- 12.1: Stift
- 12.2: Kopf
- 12.3: Feder
- 12.4: Höhle

- a: Abstand
- A: Achse
- α₁, α₂: Winkel
- Hₐ, H_{b}, h, h': Höhe
- T: Tiefe
- V: Verlaufsrichtung
- r: Abstand

## Patentansprüche

1. Vorrichtung zum Befestigen von weiteren Elementen an einem stabförmigen Bauteil, insbesondere bei einem Industrieroboter, mit zwei identischen Winkelteilen, **dadurch gekennzeichnet, dass** jedes Winkelteil (10.1, 10.2) einen ersten (10.1a, 10.2a) und einen zweiten Schenkel (10.1b, 10.2b) aufweist, die winklig zueinander ausgerichtet sind und die durch einen Übergangsbereich (10.1c, 10.2c) mit gegenüber den Schenkeln (10.1a, 10.1b, 10.2a, 10.2b) verminderter Höhe (h) miteinander verbunden sind und dass der erste Schenkel (10.1a, 10.2a) in seiner dem zweiten Schenkel (10.1b, 10.2b) zugewandten Kante (10.1d, 10.2d) eine Ausnehmung (10.1e, 10.2e) aufweist, in die der Übergangsbereich (10.1c, 10.2c) des jeweils anderen Winkelteils (10.1, 10.2) eingreift.

2. Vorrichtung nach Anspruch 1, **dadurch gekennzeichnet, dass** ein zwischen den Schenkeln (10.1a, 10.1b bzw. 10.2a, 10.2b) eines Winkelteils (10.1, 10.2) eingeschlossener Winkel (α₁, α₂) im wesentlichen ein rechter ist.

3. Vorrichtung nach Anspruch 1 oder 2, **dadurch gekennzeichnet, dass** der zweite Schenkel (10.1b, 10.2b) zum ersten Schenkel (10.1a, 10.2a) hin in Richtung seiner Erstreckung ein konkaves Profil aufweist.

4. Vorrichtung nach Anspruch 3, **dadurch gekennzeichnet, dass** eine Profiltiefe (T) höchstens einem halben Durchmesser des stabförmigen Bauteils (9.2, 10.4) entspricht.

5. Vorrichtung nach einem der Ansprüche 1 bis 4, **dadurch gekennzeichnet, dass** der zweite Schenkel (10.1b., 10.2b) an seinem dem ersten Schenkel (10.1a, 10.2a) abgewandten Ende (10.1g, 10.2g) Aufnahmemittel (10.1h, 10.2h) für Verbindungselemente (11) zum Verbinden der entsprechenden Enden (10.1g, 10.2g) der beiden Winkelteile (10.1, 10.2) aufweist.

6. Vorrichtung nach einem der Ansprüche 1 bis 5, **dadurch gekennzeichnet, dass** der erste Schenkel (10.1a, 10.2a) Aufnahmemittel (10.1i, 10.2i) für Befestigungsmittel zum Befestigen der weiteren Elemente (9.3) aufweist.

7. Vorrichtung nach einem der Ansprüche 1 bis 6, **dadurch gekennzeichnet, dass** an den zweiten Schenkel (10.1.b, 10.2.b) zumindest eines Winkelteils (10.1, 10.2) Positionierungsmittel (12) zum Festlegen einer Position der Vorrichtung an dem stabförmigen Bauteil (9.2, 10.4) angeordnet sind.

8. Vorrichtung nach einem der Ansprüche 1 bis 7, **dadurch gekennzeichnet, dass** die Höhe (h) des Übergangsbereichs (10.1c, 10.2c) im wesentlichen eine Höhe (h) der Ausnehmung (10.1e, 10.2e) in dem ersten Schenkel (10.1a, 10.2a) entspricht.

9. Einrichtung zum Befestigen von weiteren Elementen an einem Gegenstand, insbesondere an einem Industrieroboter, mit zwei identischen Winkelteilen und mit einem stab- oder rohrförmigen Bauteil, das an dem Gegenstand befestigbar ist, **dadurch gekennzeichnet, dass** dass jedes Winkelteil (10.1, 10.2) einen ersten (10.1a, 10.2a) und einen zweiten Schenkel (10.1b, 10.2b) aufweist, die winklig zueinander ausgerichtet sind und die durch einen Übergangsbereich (10.1c, 10.2c) mit gegenüber den Schenkeln (10.1a, 10.1b, 10.2a, 10.2b) verminderter Höhe (h) miteinander verbunden sind, dass der erste Schenkel (10.1a, 10.2a) in seiner dem zweiten Schenkel (10.1b, 10.2b) zugewandten Kante (10.1d, 10.2d) eine Ausnehmung (10.1e, 10.2e) aufweist, in die der Übergangsbereich (10.1c, 10.2c) des jeweils anderen Winkelteils (10.1, 10.2) eingreift, so dass zwischen den zweiten Schenkeln (10.1b, 10.2b) ein Bereich (10.3) gebildet ist, in dem ein Abschnitt des Bauteils (10.4) aufnehmbar ist.

10. Einrichtung nach Anspruch 9, **dadurch gekennzeichnet, dass** das Bauteil (10.4) in seiner Mantelfläche (10.4a) Vertiefungen (10.4b) aufweist, in die an dem zweiten Schenkel (10.1b, 10.2b) zumindest eines Winkelteils (10.1, 10.2) vorhandene Positionierungsmittel (12) einbringbar sind.

11. Einrichtung nach Anspruch 10, **dadurch gekennzeichnet, dass** die Positionierungsmittel (12) als wenigstens ein in ein Aufnahmemittel (10.1j, 10.2j) in dem zweiten Schenkel (10.1b, 10.2b) beweglich eingesetzter Stift (12.1) ausgebildet sind.

12. Einrichtung nach Anspruch 11, **dadurch gekennzeichnet, dass** der Stift (12.1) mit einem Federmittel (12.3) zusammenwirkt, durch das er in seiner Ruhestellung teilweise in den Bereich (10.3) zwischen den zweiten Schenkeln (10.1b, 10.2b) hinein verschoben ist.

13. Einrichtung nach einem der Ansprüche 9 bis 12, **gekennzeichnet durch** eine Vorrichtung nach einem der Ansprüche 2 bis 8.
